# EUROPÄISCHE PATENTSCHRIFT

(11) **EP 1 452 858 B1**
(45) Veröffentlichungstag und Bekanntmachung des Hinweises auf die Patenterteilung: **14.05.2008**
(21) Anmeldenummer: 04004666.6
(22) Anmeldetag: 01.03.2004
(51) Int. Cl.: G01N 27/38

(54) **Verfahren zum Reinigen von Elektrodenoberflächen sowie Vorrichtung zur Durchführung des Verfahrens**
Method for cleaning the surface of electrodes and corresponding device
Appareil et procédé pour nettoyer la surface d'électrodes

(30) Priorität: 01.03.2003 DE 10309022
(43) Veröffentlichungstag der Anmeldung: 01.09.2004
(73) Patentinhaber: Dr- A. Kuntze Gmbh, 40668 Meerbusch-Lank (DE)
(72) Erfinder: Scheffold, Christoph, 41844 Wegberg (DE)
(74) Vertreter: Sroka, Peter-Christian

(56) Entgegenhaltungen:
- CH-A- 672 845
- DE-A- 10 043 494
- FR-A- 2 792 726
- US-A- 4 059 406
- US-A- 4 317 705
- US-A- 4 566 949

## Beschreibung

Die Erfindung betrifft ein Verfahren zum Reinigen von Elektrodenoberflächen in einer Einrichtung zur Bestimmung von Inhaltsstoffen eines Elektrolyten mit in einer Meßzelle zur Aufnahme des Elektrolyten angeordneten Elektroden sowie eine Vorrichtung zur Durchführung des Verfahrens.

Es gibt eine Vielzahl von Meßverfahren zur Bestimmung von Inhaltsstoffen in Elektrolyten, bei denen die Größe der aktiven Elektrodenoberfläche das Meßergebnis mit bestimmt. Dies hat zur Folge, daß bei einer Veränderung der aktiven Elektrodenoberfläche das Resultat der Messung ungewollt beeinflußt wird.

Aus diesem Grunde ist es notwendig, die zur Messung benötigten Elektroden regelmäßig zu reinigen.

Hier gibt es zunächst die Möglichkeit einer mechanischen Reinigung. Diese kann beispielsweise auf einem Abrieb durch Sand oder Korund beruhen, es können aber auch sonstige Reinigungsmittel oder Ultraschall eingesetzt werden. Das Reinigungsmittel wird durch Wasserkraft oder mechanische Hilfsmittel mit der Elektrodenoberfläche in Kontakt gebracht. Dies führt in den meisten Fällen dazu, daß die Elektrodenoberfläche nicht zu 100 Prozent gereinigt wird. Je nach Verschmutzungsgrad ist in den meisten Fällen eine manuelle Reinigung unumgänglich.

Ein weiterer Nachteil ergibt sich bei Meßverfahren, die mit einer Depolarisierung der Elektrodenoberfläche durch den zu messenden Inhaltsstoff arbeiten. Bei diesen Meßverfahren wird die Oberfläche der Meßelektrode durch Anlegen einer geregelten Spannung polarisiert. Der im Meßmedium zu messende Stoff, beispielsweise Chlor, depolarisiert die Meßelektrode und der daraus resultierende Strom entspricht dem zu messenden Inhaltsstoff. Es hat sich herausgestellt, daß bei einer kontinuierlichen mechanischen Reinigung die Meßelektrode nicht richtig polarisieren kann.

Es ist weiterhin bekannt, auf Metallteile ein Verfahren der elektrolytischen Entfettung anzuwenden, bei dem während der Anwendung eines alkalischen Reinigers das Metall als Anode oder Katode geschaltet wird. Durch die Gasentwicklung an der Metalloberfläche wird die reinigende Wirkung der alkalischen Lösung verstärkt. Zur Reinigung der Elektrodenoberfläche in einer Meßzelle ist dieses Verfahren bisher nicht eingesetzt worden, weil man befürchten mußte, daß hierdurch die richtige Polarisierung der Elektroden gestört würde.

Die Patentschrift CH-672845 offenbart ein Verfahren zur Reinigung von Elektroden wonach eine Spannung unterschiedlicher Polarität an die Elektroden angelegt wird, damit an beiden Elektroden abwechselnd sowohl Jod als auch Wasserstoff gebildet werden.

Der Erfindung liegt die Aufgabe zugrunde, ein Verfahren zum Reinigen von Elektrodenoberflächen in einer Einrichtung zur Bestimmung von Inhaltsstoffen eines Elektrolyten mit in einer Meßzelle zur Aufnahme des Elektrolyten angeordneten Elektroden zu schaffen, mit dem eine automatische Reinigung der Elektrodenoberflächen ermöglicht wird, die diskontinuierlich in vorgegebenen Zeitabständen in das Meßverfahren eingeschaltet werden kann, wobei Stoffabscheidungen auf den Elektro-denoberflächen verhindert werden sollten. Weiterhin sollte das Verfahren in Abhängigkeit vom Verschmutzungsgrad der Elektrodenoberfläche steuerbar sein.

Die Lösung dieser Aufgabe erfolgt erfindungsgemäß durch ein Verfahren mit den im kennzeichnenden Teil des Patentanspruchs 1 angegebenen Verfahrensschritten a) und b). Vorteilhafte Weiterbildungen des erfindungsgemäßen Verfahrens sind in den abhängigen Ansprüchen beschrieben.

Der Grundgedanke der Erfindung besteht darin, ein elektrolytisches Reinigungsverfahren in der Weise anzuwenden, daß während eines vorgegebenen ersten Zeitabschnitts ein Gleichstrom mit einer ersten vorgegebenen Polarität und einer vorgegebenen geregelten Stromstärke durch die mit einem Elektrolyten gefüllte Meßzelle über die zu reinigenden Elektroden geschickt wird und dann nach Ablauf dieses ersten Zeitabschnitts während eines zweiten Zeitabschnitts die Stromrichtung des Gleichstroms geändert wird und wiederum der Gleichstrom mit der entgegengesetzten Polarität über die zu reinigenden Elektroden durch die mit dem Elektrolyten geführte Meßzelle geschickt wird. Diese Verfahrensschritte können mehrfach nacheinander ausgeführt werden, bis eine optimale Reinigung erreicht ist.

Bei dem erfindungsgemäßen Verfahren wird durch den definierten Stromfluß, dessen Stromrichtung gewechselt wird, wechselweise Wasserstoff und Sauerstoff auf den Elektrodenoberflächen erzeugt. Durch die Umschaltung der Stromrichtung werden Stoffabscheidungen auf den Elektrodenoberflächen verhindert.

Da als Elektrolyt in der Meßzelle ohne weiteres der Elektrolyt verwendet werden kann, dessen Inhaltsstoffe durch die Messung in der Meßzelle bestimmt werden sollen, läßt sich das Reinigungsverfahren unmittelbar in das Meßverfahren integrieren und man erhält durch eine definierte Steuerung des Reinigungsablaufes eine immer optimal arbeitende Messung. Das Reinigungsintervall kann in Abhängigkeit vom Verschmutzungsgrad frei gewählt werden. Es hat sich weiterhin herausgestellt, daß bei einer optimalen Steuerung des Reinigungsverfahrens die Zeit der Neupolarisation der Meßelektrode sehr kurz ist, so daß die eigentliche Messung durch den Reinigungsvorgang nur kurz unterbrochen wird.

Es hat sich weiterhin als vorteilhaft erwiesen, wenn die Meßzelle während des Reinigungsverfahrens vom Elektrolyten durchströmt wird, weil dann die von den Elektrodenoberflächen abgelösten Ablagerungen sogleich aus der Meßzelle entfernt werden. Als vorteilhaft hat sich auch erwiesen, wenn der erste und der zweite Zeitabschnitt des Verfahrens jeweils die gleiche Länge aufweisen, die etwa zwischen 1 und 120 sec und in besonders vorteilhafter Weise 20 sec betragen kann. Selbstverständlich ist es möglich, die Verfahrensschritte a) und b) des erfindungsgemäßen Verfahrens mehrfach zu wiederholen und durch eine besondere Steuerung die Länge der Zeitabschnitte während des Reinigungsverfahrens zu verändern.

Weiterhin besteht die Möglichkeit, den Stromverlauf während des ersten und zweiten Zeitabschnittes zu verändern und beispielsweise den Strom zu Beginn eines Zeitabschnittes in einem rampenförmigen Anstiegsabschnitt heraufzufahren und/oder ihn am Ende des Zeitabschnittes insbesondere am Ende der Gesamtmessung in einem rampenförmigen Abfallabschnitt herunterzufahren. Zwischen dem Herauffahren und dem Herunterfahren des Stroms kann der Stromverlauf auf einen konstanten Wert geregelt werden.

Ein weiterer Vorteil des erfindungsgemäßen Reinigungsverfahrens besteht darin, daß der Spannungsabfall zwischen den zu reinigenden Elektroden während des Reinigungsvorgangs kontinuierlich oder diskontinuierlich gemessen werden kann und somit der fortschreitende Grad der Reinigung überwacht werden kann.

Eine Vorrichtung zur Durchführung des erfindungsgemäßen Verfahrens ist in Anspruch 13 beschrieben. Vorteilhafte Weiterbildungen dieser Vorrichtung sind Gegenstand der Ansprüche 14 und 15.

Die Vorrichtung zur Durchführung des Reinigungsverfahrens kann verhältnismäßig einfach aufgebaut und in die Schaltung zur Durchführung und Auswertung des Meßverfahrens zur Bestimmung der Inhaltsstoffe des Elektrolyten integriert sein.

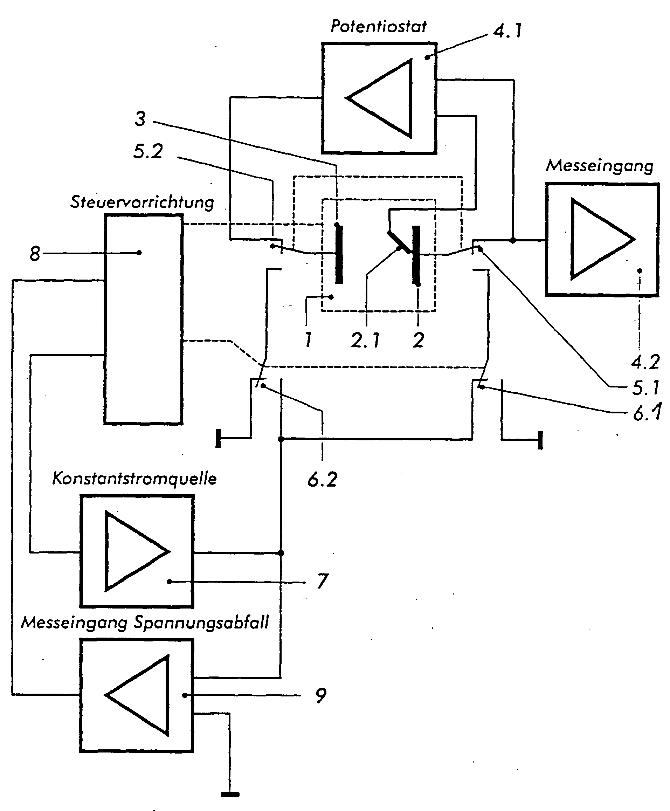

Im folgenden wird anhand der beigefügten Zeichnung ein Ausführungsbeispiel für das Verfahren nach der Erfindung und die Vorrichtung zur Durchführung des Verfahrens erläutert.

Die Zeichnung zeigt in einem schematisierten Schaltbild eine Einrichtung zur Bestimmung von Inhaltsstoffen eines Elektrolyten mit einer Meßzelle 1 zur Aufnahme des Elektrolyten, in der eine Meßelektrode 2 und eine ihr gegenüberliegende Gegenelektrode 3 angeordnet sind. Vor der Meßelektrode 2 ist eine Bezugselektrode 2.1 angeordnet. Die Elektroden 2, 2.1 und 3 sind mit einer Meßvorrichtung 4.1 und einer Auswertevorrichtung 4.2 verbunden, die an sich bekannt sind und im folgenden nicht näher erläutert werden.

Zur Durchführung des Reinigungsverfahrens an den Elektrodenoberflächen dient eine Vorrichtung mit einer Konstantstromquelle 7, an welche die Elektroden über einen ersten ansteuerbaren Umschalter 5.1 und 5.2 angeschlossen werden können, wobei die Polarität des zugeführten Gleichstroms mittels eines zweiten Umschaltes 6.1 und 6.2 gewechselt werden kann. Eine Steuervorrichtung 8 steuert die beiden Umschalter 5.1 - 5.2 bzw. 6.1 - 6.2 in einer vorgegebenen Zeitsteuerung an. Weiterhin wird durch die Steuervorrichtung 8 die Konstantstromquelle 7 angesteuert. Mittels einer Meßvorrichtung 9 kann zusätzlich der Spannungsabfall zwischen den Elektroden 2 und 3 gemessen werden und das Ausgangssignal dieser Meßvorrichtung der Steuervorrichtung 8 zugeführt werden.

Der Meßvorgang mittels der oben beschriebenen Vorrichtung kann beispielsweise folgendermaßen ablaufen.

In der Meßzelle 1 befindet sich ein Elektrolyt, dessen Inhaltsstoffe bestimmt werden sollen. Es kann sich beispielsweise um Wasser handeln, dessen Chlorgehalt fortlaufend bestimmt werden soll. Dabei kann die Meßzelle 1 derart aufgebaut und angeschlossen sein, daß ihr ständig der Elektrolyt zugeführt und von ihr abgeführt wird, so daß die Meßzelle 1 von dem Elektrolyten durchströmt wird. Der Meßvorgang zur Bestimmung der Inhaltsstoffe des Elektrolyten wird in bestimmten vorgegebenen Zeitabständen von der Steuervorrichtung 8 aus durch Umschalten des ersten Umschalters 5.1 - 5.2 unterbrochen und die Elektroden 2 und 3 werden an die Konstantstromquelle 7 angeschlossen. Es wird nun während eines vorgegebenen ersten Zeitabschnittes über die Elektroden 2 und 3 durch die Meßzelle hindurch ein Gleichstrom vorgegebener Polarität mit einer auf einen vorgegebenen Wert geregelten Stromstärke hindurchgeleitet. Nach Ablauf des ersten Zeitabschnitts wird von der Steuervorrichtung 8 aus der zweite Umschalter 6.1 - 6.2 betätigt und somit die Polarität des zugeführten Gleichstroms gewechselt. Nach Ablauf des zweiten Zeitabschnitts wird von der Steuervorrichtung 8 aus über den zweiten Umschalter 6.1 - 6.2 die Polarität des zugeführten Gleichstroms erneut gewechselt und dieser Vorgang kann sich mehrere Male wiederholen, bis beispielsweise durch Messung des Spannungsabfalls zwischen den Elektroden 2 und 3 der optimale Reinigungszustand festgestellt wird. Es kann dann von der Steuervorrichtung 8 her die Konstantstromquelle 7 derart angesteuert werden, daß der Strom über eine Rampenfunktion heruntergefahren wird und dann wird über den ersten Umschalter 5.1 - 5.2 das Reinigungsverfahren beendet und die Elektroden 2 und 3 wieder an die Meß- und Auswerteeinrichtung 4.1 - 4.2 angeschlossen.

## Patentansprüche

1. Verfahren zum Reinigen von Elektrodenoberflächen in einer Einrichtung zur Bestimmung von Inhaltsstoffen eines Elektrolyten mit in einer Meßzelle zur Aufnahme des Elektrolyten angeordneten Elektroden, **gekennzeichnet durch** folgende Verfahrensschritte:
a) **Durch** die mit einem Elektrolyten gefüllte Meßzelle wird über die zu reinigenden Elektroden während eines vorgegebenen ersten Zeitabschnitts ein Gleichstrom vorgegebener Polarität geleitet, der eine auf einen vorgegebenen Verlauf geregelte Stromstärke aufweist;
b) Nach Ablauf des ersten Zeitabschnitts wird über die zu reinigenden Elektroden während eines vorgegebenen zweiten Zeitabschnitts ein Gleichstrom mit umgekehrter Polarität geleitet, der eine auf einen vorgegebenen Verlauf geregelte Stromstärke aufweist.

2. Verfahren nach Anspruch 1, **dadurch gekennzeichnet, daß** der erste und der zweite Zeitabschnitt die gleiche Länge aufweisen.

3. Verfahren nach Anspruch 1 oder 2, **dadurch gekennzeichnet, daß** der erste und der zweite Zeitabschnitt jeweils eine Länge von 1 bis 120 sec aufweisen.

4. Verfahren nach Anspruch 2 und 3, **dadurch gekennzeichnet, daß** der erste und der zweite Abschnitt eine Länge von 20 sec aufweisen.

5. Verfahren nach einem der Ansprüche 1 bis 4, **dadurch gekennzeichnet, daß** die Verfahrensschritte a) und b) mehrfach wiederholt werden.

6. Verfahren nach Anspruch 5, **dadurch gekennzeichnet, daß** die Längen der Zeitabschnitte der Verfahrensschritte a) und b) während des Reinigungsverfahrens verändert werden.

7. Verfahren nach einem der Ansprüche 1 bis 6, **dadurch gekennzeichnet, daß** der Stromverlauf während des ersten und zweiten Zeitabschnitts zu Beginn einen rampenförmigen Anstiegsabschnitt und/oder am Ende eine rampenförmigen Abfallabschnitt aufweist.

8. Verfahren nach einem der Ansprüche 1 bis 6, **dadurch gekennzeichnet, daß** der Stromverlauf am Ende des letzten Zeitabschnitts des Reinigungsverfahrens einen rampenförmigen Abfallabschnitt aufweist.

9. Verfahren nach Anspruch 7, **dadurch gekennzeichnet, daß** der Stromverlauf zwischen einem Anstiegsabschnitt und einem Abfallabschnitt auf einen konstanten Wert geregelt wird.

10. Verfahren nach einem der Ansprüche 1 bis 9, **dadurch gekennzeichnet, daß** während des Reinigungsverfahrens der Meßzelle Elektrolyt zu- und von ihr abgeführt wird, so daß die Meßzelle laufend von Elektrolyt durchströmt wird.

11. Verfahren nach einem der Ansprüche 1 bis 10, **dadurch gekennzeichnet, daß** während des Reinigungsverfahrens der Spannungsabfall zwischen den Elektroden kontinuierlich oder in vorgegebenen Zeitabständen gemessen wird.

12. Verfahren nach einem der Ansprüche 1 bis 11, **dadurch gekennzeichnet, daß** als Elektrolyt während des Reinigungsverfahrens der gleiche Elektrolyt dient, dessen Inhaltsstoffe bestimmt werden sollen.

13. Vorrichtung zur Durchführung des Verfahrens nach einem der Ansprüche 1 bis 12 mit einer Einrichtung mit einer Meßzelle zur Aufnahme eines Elektrolyten, in der zwei in vorgegebenem Abstand einander gegenüberliegende Elektroden angeordnet sind, die an eine eine Stromquelle enthaltende Meß- und Auswerteeinheit anschließbar sind, **gekennzeichnet durch** eine Konstante Stromquelle (7), eine erste Umschaltvorrichtung (5.1 - 5.2) zur Abtrennung der Elektroden (2, 3) von der Meß- und Auswerteeinheit (4.1 - 4.2) und zu ihrem Anschluß an die Konstantstromquelle (7) sowie eine zweite Umschaltvorrichtung (6.1 - 6.2) zur Umkehrung der Polarität des den Elektroden (2, 3) von der Konstantstromquelle (7) zugeführten Gleichstroms sowie eine Steuervorrichtung (8) zur zeitlichen Ansteuerung der ersten und zweiten Umschaltvorrichtung.

14. Vorrichtung nach Anspruch 13, **dadurch gekennzeichnet, daß** die Steuervorrichtung (8) den Stromverlauf des von der Konstantstromquelle (7) zu den Elektroden (2, 3) zugeführten Gleichstroms in einem Antiegsabschnitt und/oder einem Abfallabschnitt steuert.

15. Vorrichtung nach Anspruch 13 oder 14, **gekennzeichnet durch** eine Vorrichtung (9) zur Messung des Spannungsabfalls zwischen den Elektroden (2, 3), deren Ausgangssignal der Steuervorrichtung (8) zugeführt wird zur Erzeugung eines die erste Umschaltvorrichtung (5.1 - 5.2) betätigenden Abschaltsignals.

## Claims

1. A method of cleaning electrode surfaces in a device for determining the contents of an electrolyte, having electrodes arranged in a measuring cell for receiving the electrolyte, **characterised by** the following method steps:
a) a direct current of predetermined polarity whereof the current intensity is regulated to a predetermined profile is fed through the measuring cell, which is filled with an electrolyte, by way of the electrodes to be cleaned, for a predetermined first time period;
b) once the first time period has expired, a direct current of the opposite polarity whereof the current intensity is regulated to a predetermined profile is fed by way of the electrodes to be cleaned, for a predetermined second time period.

2. A method according to Claim 1, **characterised in that** the first and the second time periods are of the same length.

3. A method according to Claim 1 or 2, **characterised in that** the first and the second time periods are each 1 to 120 sec in length.

4. A method according to Claim 2 and 3, **characterised in that** the first and the second periods are 20 sec in length.

5. A method according to one of Claims 1 to 4, **characterised in that** the method steps a) and b) are repeated multiple times.

6. A method according to Claim 5, **characterised in that** the lengths of the time periods of method steps a) and b) are changed during the cleaning procedure.

7. A method according to one of Claims 1 to 6, **characterised in that** the current profile during the first and second time periods has a ramped rising portion at the beginning and/or a ramped falling portion at the end.

8. A method according to one of Claims 1 to 6, **characterised in that** the current profile has a ramped falling portion at the end of the last time period of the cleaning procedure.

9. A method according to Claim 7, **characterised in that** the current profile between a rising portion and a falling portion is regulated to a constant value.

10. A method according to one of Claims 1 to 9, **characterised in that** during the procedure of cleaning the measuring cell, electrolyte is fed to and from it, with the result that electrolyte continuously flows through the measuring cell.

11. A method according to one of Claims 1 to 10, **characterised in that** during the cleaning procedure the voltage drop between the electrodes is measured continuously or at predetermined intervals.

12. A method according to one of Claims 1 to 11, **characterised in that** the electrolyte used during the cleaning procedure is the same electrolyte whereof the contents are to be determined.

13. A device for performing the method according to one of Claims 1 to 12, having a device having a measuring cell for receiving an electrolyte, in which two electrodes are arranged opposite one another and at a predetermined spacing from one another and may be connected to a measuring and evaluating unit including a current source, **characterised by** a constant current source (7), a first reversal device (5.1 - 5.2) for disconnecting the electrodes (2, 3) from the measuring and evaluating unit (4.1 - 4.2) and for connecting them to the constant current source (7), and a second reversal device (6.1 - 6.2) for reversing the polarity of the direct current which is fed to the electrodes (2, 3) from the constant current source (7), and a control device (8) for timed triggering of the first and second reversal devices.

14. A device according to Claim 13, **characterised in that** the control device (8) controls the current profile of the direct current which is fed to the electrodes (2, 3) from the constant current source (7) to give a rising portion and/or a falling portion.

15. A device according to Claim 13 or 14, **characterised by** a device (9) for measuring the voltage drop between the electrodes (2, 3), the output signal thereof being fed to the control device (8) for generating a switch-off signal which actuates the first reversal device (5.1 - 5.2).

## Revendications

1. Une procédure de nettoyage de la surface d'électrodes dans une installation conçue pour recevoir un électrolyte ainsi qu'une cellule de mesure dans laquelle sont disposées des électrodes après y avoir introduit l'électrolyte et qui se compose ensuite des étapes suivantes :
a) Durant une première étape déterminée à l'avance, un courant continu de polarité donnée circule et traverse la cellule de mesure remplie d'électrolyte et dans laquelle sont disposés les électrodes à nettoyer ; ce courant suit un trajet donné et a une puissance spécifique.
b) Une fois la première étape terminée, une deuxième étape déterminée à l'avance commence durant laquelle un courant continu de polarité inversée traverse les électrodes à nettoyer ; ce courant suit un trajet donné et a une puissance spécifique.

2. Une procédure basée sur l'affirmation 1 et se singularisant par le fait que la première étape et la deuxième étape de cette procédure ont la même durée.

3. Une procédure basée sur l'affirmation 1 ou 2 et se singularisant par le fait que la première étape et la deuxième étape de cette procédure ont une durée comprise entre 1 et 120 secondes.

4. Une procédure basée sur les affirmations 2 et 3 et se singularisant par le fait que la première étape et la deuxième étape de cette procédure ont une durée de 20 secondes.

5. Une procédure basée sur les affirmations 1 à 4 et se singularisant par le fait que les étapes a) et b) de cette procédure sont répétées à plusieurs reprises.

6. Une procédure basée sur l'affirmation 5 et se singularisant par le fait que la durée des étapes a) et b) durant la procédure de nettoyage vont être modifiées.

7. Une procédure basée sur les affirmations 1 à 6 et se singularisant par le fait que le flux de courant durant la première ou la deuxième étape se présente au début sous la forme d'une pente ascendante et (ou) à la fin sous la forme d'une pente descendante.

8. Une procédure basée sur les affirmations 1 à 6 et se singularisant par le fait que le flux de courant, à la fin de la dernière étape de la procédure de nettoyage se présente sous la forme d'une pente descendante.

9. Une procédure basée sur l'affirmation 7 et se singularisant par le fait que le flux de courant, entre une section ascendante et une section descendante a une valeur régulée et constante.

10. Une procédure basée sur les affirmations 1 à 9 et se singularisant par le fait que, durant la procédure de nettoyage, l'électrolyte pénètre dans la cellule de mesure et en revient, de telle sorte que l'électrolyte exploitant la cellule de mesure soit traversé par ce courant.

11. Une procédure basée sur les affirmations 1 à 10 et se singularisant par le fait que, durant la procédure de nettoyage, la baisse de tension entre les électrodes fasse l'objet de mesures continues ou à des intervalles spécifiés de temps.

12. Une procédure basée sur les affirmations 1 à 11 et se singularisant par le fait que, pendant la procédure de nettoyage, le même électrolyte est utilisé et que la composition de ce dernier doit être analysée.

13. Un dispositif de réalisation de la procédure basée sur les affirmations 1 à 12 et se singularisant par le fait qu'une installation comportant une cellule de mesure contrôle l'admission d'un électrolyte dans les deux électrodes qui sont disposées l'une contre l'autre avec l'espacement susmentionné et qui sont raccordées à un groupe de mesure et d'analyse contenant une source de courant, de telle sorte qu'une source de courant constant (7) alimente un premier dispositif de commutation (5.1-5.2) pour isoler les électrodes (2, 3) du groupe de mesure et d'analyse (4.1 -4.2) et de leur contact avec la source de courant constant (7) et de telle sorte qu'un deuxième dispositif de commutation (6.1-6.2) change la polarité du courant continu acheminé par la source de courant constant (7) dans les deux électrodes (2, 3) et de telle sorte qu'un appareil de commande (8) déclenche en temps voulu le premier ou le deuxième dispositif de commutation..

14. Un dispositif basé sur l'affirmations 13 et se singularisant par le fait que l'appareil de commande (8) fait passer le courant continu acheminé de la source de courant constant (7) aux électrodes (2, 3) dans la section ascendante et (ou) dans la section descendante..

15. Un dispositif basé sur l'affirmation 13 ou 14 et se singularisant par le fait qu'un appareil (9) de mesure de la baisse de tension entre les électrodes (2, 3) est alimenté par le signal de sortie de l'appareil de commande (8) pour produire un signal de mise hors circuit déclenchant le premier dispositif de commutation (5.1 - 5.2).
